Europäisches Patentamt

European Patent Office

Office européen des brevets

(11) Numéro de publication : **0 142 395**
**B1**

(12) **FASCICULE DE BREVET EUROPÉEN**

(45) Date de publication du fascicule du brevet :
25.03.87

(21) Numéro de dépôt : **84401800.2**

(22) Date de dépôt : **12.09.84**

(51) Int. Cl.⁴ : **F 16 D 65/56**

(54) **Dispositif d'actionnement de frein à disque à réglage automatique.**

(30) Priorité : **13.09.83 FR 8314507**

(43) Date de publication de la demande :
**22.05.85 Bulletin 85/21**

(45) Mention de la délivrance du brevet :
**25.03.87 Bulletin 87/13**

(84) Etats contractants désignés :
**DE GB IT SE**

(56) Documents cités :
**Néant**

(73) Titulaire : **BENDIX France**
**126, rue de Stalingrad**
**F-93700 Drancy (FR)**

(72) Inventeur : **Le Marchand, Claude**
**8, Allée des Tilleuls**
**F-95330 Domont (FR)**
Inventeur : **Gautier, Jean-Pierre**
**46 ter, Avenue Louis Blanc**
**F-93600 Aulnay-sous-Bois (FR)**

(74) Mandataire : **Le Moenner, Gabriel et al**
**SERVICE BREVETS BENDIX 44, Rue François 1er**
**F-75008 Paris (FR)**

Jouve, 18, rue St-Denis, 75001 Paris, France

## Description

La présente invention concerne les dispositifs d'actionnement de frein à disque à rattrapage automatique du jeu résultant de l'usure des garnitures de friction selon le préambule de la revendication 1. Un tel dispositif est décrit dans le document EP-A-0 062 567.

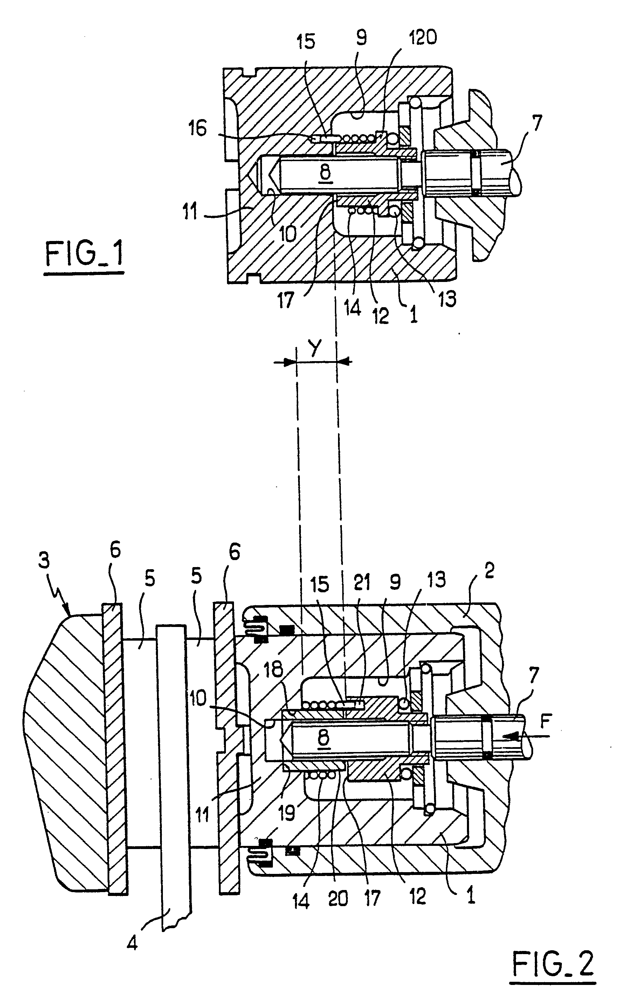

Les dispositifs d'actionnement à rattrapage de jeu automatique de ce type comprennent essentiellement, comme représenté sur la figure 1 des dessins en annexe, un piston creux de moteur de frein 1 destiné à être monté dans un cylindre 2 d'une structure d'étrier 3 (figure 2) coulissant par rapport à un support fixe de frein pour sélectivement presser contre les faces opposées d'un disque 4 des garnitures de friction 5 montées sur des plaques support de garnitures 6. Le dispositif d'actionnement comprend également une tige 7 actionnable par un mécanisme de frein à main ou de parc comprenant une partie d'extrémité filetée 8 s'étendant axialement dans une cavité intérieure 9 du piston 1 jusque dans un alésage 10 formé dans la paroi de fond du piston 1 délimitant la cavité intérieure 9 du côté du disque 4. Sur l'extrémité filetée 8 de la tige 7 est engagée une douille taraudée 12 déplaçable axialement avec le piston 1 au moyen d'un système à butée à billes 13 coopérant avec une collerette 120 de la douille 12. La périphérie de l'extrémité avant (opposée à la butée à billes 13) de la douille 12 est usinée avec précision pour permettre le montage ajusté d'un ressort hélicoïdal 14 formant embrayage unidirectionnel et comportant une partie d'extrémité rabattue axialement 15 engagée dans un trou borgne 16 formé dans la paroi de fond 11 du piston 1. De cette façon le ressort 14 permet la rotation de la douille 12 par rapport à la tige filetée 8 et au piston 1 uniquement dans le sens correspondant du déplacement de la douille vers le fond 11 du piston (le piston 1 étant empêché de tourner par rapport au cylindre 2, par exemple par coopération avec la plaque support 6 de garniture de friction 5 adjacente, la tige 7-8 étant également empêchée de tourner, par exemple au moyen d'un téton, à son extrémité extérieure, coopérant avec une gorge dans le système de came d'actionnement du mécanisme de frein à main).

Le document EP-A-0 062 567 propose, dans le cas où le piston est réalisé en matériau tendre, d'interposer entre la douille taraudée et le fond du piston une rondelle d'appui en matériau dur comportant des nervures axiales à sa périphérie et des nervures radiales frontales, la rondelle étant reçue et entièrement logée dans un logement formé dans la paroi de fond du piston. Ce document n'envisage toutefois pas de modifications du système de rattrapage automatique de jeu tel que décrit en relation avec la figure 1 de la présente demande et la figure 1 dudit document et, notamment en ce qui concerne la coopération entre le ressort et le fond du piston par son extrémité rabattue.

La présente invention a pour objet de proposer un nouveau dispositif d'actionnement de frein à disque à rattrapage automatique de jeu de conception simple et robuste, de faibles coûts de fabrication et de montage, permettant une réduction notable de poids de l'ensemble, et convenant à un piston en alliage léger.

A cet effet, conformément à une caractéristique de la présente invention, l'organe d'appui tubulaire comporte une partie d'extrémité emmanchée dans le fond du piston et une partie s'étendant en saillie dans la cavité du piston, le ressort étant monté sur cette partie en saillie et comprenant un bras d'extrémité relié à la douille.

Avec un tel agencement, l'organe d'appui tubulaire ou insert emmanché dur dans le fond du piston présente à cet effet un diamètre extérieur usiné à une tolérance serrée avec un bon état de surface. Le montage du ressort d'embrayage sur cet organe d'appui tubulaire déjà correctement surfacé évite d'avoir à rectifier la douille taraudée et permet ainsi une réduction de coûts appréciable. De plus, le montage du ressort sur l'organe d'appui tubulaire permet de réduire considérablement l'épaisseur du fond du piston, en concourant à réaliser ainsi un ensemble de dispositif d'actionnement de frein à disque plus léger. Enfin, dans le cas d'un piston en matériau tendre, l'organe d'appui emmanché permet une meilleure transmission des forces fournies par la tige de frein à main et le bras d'extrémité du ressort coopère avec la douille et non plus avec le matériau tendre du piston.

D'autres caractéristiques et avantages de la présente invention ressortiront de la description suivante d'un mode de réalisation faite en relation avec les dessins annexés, sur lesquels :

la Figure 1 représente schématiquement un dispositif d'actionnement de frein à disque à l'art antérieur tel qu'il vient d'être décrit ; et

la Figure 2 représente, également en coupe longitudinale, un dispositif d'actionnement selon l'invention.

Sur les figures 1 et 2, les éléments identiques ou analogues portent les mêmes chiffres de référence, de sorte que l'on omettra de reprendre l'agencement général du dispositif de l'invention tel que représenté sur la figure 2.

Comme on le voit sur cette figure 2, le dispositif de l'invention se distingue essentiellement du dispositif antérieur montré sur la figure 1, en ce sens que l'alésage borgne 10 du fond 11 du piston 1 comporte une partie d'entrée coaxiale de diamètre agrandi 18 définissant ainsi avec l'alésage 10 un épaulement radial 19 et dans laquelle est emmanché dur un insert tubulaire 20 usiné extérieurement avec précision et réalisé en matériau dur, par exemple en acier ou dans la composition commercialisée sous l'appellation Zicral. L'insert 20 comporte ainsi une partie emmanchée dans le fond 11 du piston 1 et une partie libre s'étendant en saillie dans la cavité 9 jusqu'en regard de la face frontale d'appui 17 de la douille taraudée 12. Conformément à l'invention, la douille taraudée 12 présente un diamètre extérieur légèrement agrandi correspondant à celui de la collerette 120 du mode de réalisation antérieur de façon que la face frontale d'appui 17 déborde radialement vers l'extérieur par rapport à l'insert 20. Dans cette face frontale 17 est ménagé un trou borgne axial 21 dans lequel est reçue l'extrémité rabattue axialement 15 du ressort hélicoïdal d'embrayage 14 enfilé à glissement juste sur la périphérie de l'insert 14. Le fonctionnement du dispositif selon l'invention est en tous points identiques à celui décrit précédemment. De plus, comme l'établit la comparaison entre les figures 1 et 2, le fait d'aménager le ressort sur une partie en saillie de l'insert 20 permet de réduire l'épaisseur du fond 11 du piston 1 d'une distance axiale Y et donc de gagner de la matière dans la proportion du diamètre de la cavité intérieure 9 du piston 1 (lequel diamètre peut d'ailleurs être augmenté par rapport à celui représenté sur la figure 2).

## Revendications

1. Dispositif d'actionnement de frein à disque à rattrapage automatique d'usure résultant de l'usure des garnitures de friction, comprenant un piston creux (1) définissant une cavité intérieure (9) délimité par un fond (11) du côté du disque ; une tige filetée de frein à main (7-8) s'étendant dans la cavité (9) du piston (1) vers le fond (11) ; une douille taraudée (12) engagée sur la tige filetée (8) et déplaçable avec le piston (1) lors de l'actionnement de celui-ci, la douille comportant une face frontale d'appui annulaire (17) ; un ressort hélicoïdal (14) formant embrayage unidirectionnel associé à la douille taraudée (12) et permettant sa rotation par rapport à la tige filetée (8) et au piston (1) uniquement dans le sens correspondant à un déplacement de la douille (12) vers le fond (11) du piston, et un organe d'appui cylindrique (20) interposé entre la face frontale d'appui (17) de la douille (12) et le fond (11) du piston (1), dans lequel il est reçu, caractérisé en ce que l'organe d'appui (20) comporte une partie d'extrémité emmanchée dur dans le fond (11) du piston (1), et une partie s'étendant en saillie dans la cavité (9) du piston (1), le ressort d'embrayage (14) étant monté sur cette partie en saillie et comprenant un bras d'extrémité (15) relié à la douille (12).

2. Dispositif selon la revendication 1, caractérisé en ce que le bras d'extrémité (15) du ressort (14) est rabattu axialement et est engagé dans un trou borgne (21) formé dans la face frontale d'appui (17) de la douille (12).

3. Dispositif selon les revendications 1 ou 2, caractérisé en ce que le piston (1) est réalisé en alliage léger.

4. Frein à disque, comprenant un étrier (3) coulissant par rapport à un support fixe, caractérisé en ce qu'il comporte au moins un dispositif d'actionnement selon l'une quelconque des revendications précédentes.

## Claims

1. Actuating device for a disk brake including means for automatically adjusting wear resulting from the wear of the friction pads, comprising a hollow piston (1) defining an internal cavity (9) delimited by a bottom (11) at the side of the disk ; a threaded manual brake rod (7-8) extending into the cavity (9) of the piston (1) towards the bottom (11) ; a threaded sleeve (12) engaged on the threaded rod (8) and displaceable with the piston (1) during actuation thereof, the sleeve comprising an annular front engagement face (17) ; a helical spring (14) forming a unidirectional clutch associated to the threaded sleeve (12) and permitting its rotation with respect to the threaded rod (8) and the piston (1) only in a sense corresponding to a displacement of the sleeve (12) towards the bottom (11) of the piston, and a cylindrical engagement member (20) interposed between the frontal engagement face (17) of the sleeve (12) and the bottom (11) of the piston (1) wherein it is received, characterized in that the engagement member (20) comprises an end portion fitted into the bottom (11) of the piston (1), and a portion projecting into the cavity (9) of the piston (1), the clutch spring (14) being mounted on said projecting portion and comprising an end arm (15) connected to the sleeve (12).

2. Device according to claim 1, characterized in that the end arm (15) of the spring (14) is axially rebent and is engaged in a blind hole (21) formed in the frontal engagement face (17) of the sleeve (12).

3. Device according to claim 1 or claim 2, characterized in that the piston 1 is made of a light alloy.

4. Disk brake comprising a caliper (3) sliding with respect to a fixed support, characterized in that it comprises at least one actuating device according to any of the preceding claims.

## Patentansprüche

1. Betätigungsvorrichtung für eine Scheibenbremse mit selbsttätiger Nachstellung zum Ausgleich der Abnützung der Bremsbeläge, mit einem hohlen Kolben (1), der einen Innenraum (9) aufweist, welcher auf der Seite der Bremsscheibe von einem Boden (11) begrenzt wird ; einer mit Gewinde versehenen Betätigungsstange (7-8) einer Handbremse, die sich in den Innenraum (9) des Kolbens (1) in Richtung auf den Boden (11) erstreckt ; einer mit Gewinde versehenen Hülse (12), die mit der Betätigungsstange (8) in Eingriff steht und zusammen mit dem Kolben (1) bei einer Betätigung desselben verschiebbar ist, wobei die Hülse eine stirnseitige ringförmige Angriffsfläche (17) aufweist ; einer eine Einwegkupplung bildenden Schraubenfeder (15), die der Hülse (12) zugeordnet ist und eine Drehung derselben bezüglich der Betätigungsstange (8) und des Kolbens (1) nur in einer Richtung entsprechend einer Verschiebung der Hülse (12) in Richtung auf den Boden (11) des Kolbens zuläßt, und einem zylindrischen Angriffselement (20), das zwischen die stirnseitige Angriffsfläche (17) der Hülse (12) und den Boden (11) des Kolbens (1) eingesetzt ist, von dem es aufgenommen wird, dadurch gekennzeichnet, daß das Angriffselement (20) einen in den Boden (11) des Kolbens (1) eingepaßten Endabschnitt sowie einen aus dem Innenraum (9) des Kolbens (1) vorstehenden Abschnitt aufweist, wobei die Kupplungsfeder (14) auf dem vorstehenden Abschnitt angebracht ist und einen mit der Hülse (12) verbundenen Endarm (15) aufweist.

2. Vorrichtung nach Anspruch 1, dadurch gekennzeichnet, daß der Endarm (15) der Feder (14) axial umgebogen ist und in eine Blindbohrung (21) greift, die in der stirnseitigen Angriffsfläche (17) der Hülse (12) gebildet ist.

3. Vorrichtung nach Anspruch 1 oder 2, dadurch gekennzeichnet, daß der Kolben (1) aus einer Leichtmetallegierung besteht.

4. Scheibenbremse mit einem bezüglich eines Bremsträgers gleitbaren Bremssattel (3), dadurch gekennzeichnet, daß sie mindestens eine Betätigungsvorrichtung nach einem der vorhergehenden Ansprüche aufweist.

FIG_1

FIG_2